# EUROPÄISCHE PATENTSCHRIFT

(11) **EP 3 993 954 B1**
(45) Veröffentlichungstag und Bekanntmachung des Hinweises auf die Patenterteilung: **30.10.2024**
(21) Anmeldenummer: 20733314.7
(22) Anmeldetag: 22.06.2020
(51) Int. Cl.: B25C 1/06

(54) **ARBEITSGERÄT**
WORKING IMPLEMENT
APPAREIL DE TRAVAIL

(30) Priorität: 04.07.2019 EP 19184363
(43) Veröffentlichungstag der Anmeldung: 11.05.2022
(73) Patentinhaber: Hilti Aktiengesellschaft, 9494 Schaan (LI)
(72) Erfinder: DITTRICH, Tilo, 6800 Feldkirch (AT); HEEB, Norbert, 9470 Buchs (CH); KURTH, Emanuel, 7000 Chur (CH); ABU ANTOUN, Chafic, 9470 Buchs (CH); MECKLENBURG, Arno, 10999 Berlin (DE)
(74) Vertreter: Hilti Aktiengesellschaft Corporate Intellectual Property
(86) Internationale Anmeldenummer: PCT/EP2020/067348
(87) Internationale Veröffentlichungsnummer: WO 2021/001196

(56) Entgegenhaltungen:
- WO-A1-2018/104406
- DE-A1- 102004 008 688

## Beschreibung

Die vorliegende Erfindung betrifft ein Arbeitsgerät, wie beispielsweise ein Setzgerät zum Eintreiben von Befestigungselementen in einen Untergrund, gemäß dem Oberbegriff des Patentanspruchs 1.

Derartige Arbeitsgeräte weisen oft einen Arbeitskolben auf, welcher dafür vorgesehen ist, sich entlang einer Arbeitsachse zu bewegen. Angetrieben wird der Arbeitskolben von einem Antrieb, welcher den Arbeitskolben beschleunigt. Die WO 2018/104406 A1, die ein Arbeitsgerät gemäß dem Oberbegriff des Patentanspruchs 1 offenbart, beschreibt einen Antrieb, welcher einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, um den Arbeitskolben zu beschleunigen.

Setzgeräte weisen üblicherweise eine Aufnahme für ein Befestigungselement auf, aus welcher heraus ein darin aufgenommenes Befestigungselement entlang einer Setzachse in den Untergrund befördert wird. Das Arbeitselement wird hierfür von dem Antrieb entlang der Setzachse auf das Befestigungselement zu angetrieben. Aus der US 6,830,173 B2 ist ein Setzgerät mit einem Antrieb bekannt, welcher einen elektrischen Kondensator und eine Spule aufweist.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem vorzugsweise handgeführten Arbeitsgerät, gemäß dem Patentanspruch 1, aufweisend einen Arbeitskolben, welcher dafür vorgesehen ist, sich entlang einer Arbeitsachse zu bewegen, einen Antrieb, welcher dafür vorgesehen ist, den Arbeitskolben entlang der Arbeitsachse anzutreiben, wobei der Antrieb einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, welches den Arbeitskolben beschleunigt, wobei das Arbeitsgerät einen Rahmen aus einem weichmagnetischen und elektrisch leitenden Material aufweist, welcher die Erregerspule umgibt und sich bezüglich der Arbeitsachse in einer umlaufenden Richtung erstreckt, wobei der Rahmen eine oder mehrere zumindest teilweise Unterbrechungen aufweist, welche sich über einen wesentlichen Teil einer bezüglich der Arbeitsachse radialen Ausdehnung des Rahmens erstrecken. Der Rahmen ist aus mehreren Lagen des weichmagnetischen und elektrisch leitenden Materials gebildet, welche durch die eine oder mehreren Unterbrechungen voneinander getrennt sind. Die Lagen des weichmagnetischen und elektrisch leitenden Materials sind in einer Stapelrichtung aufeinandergestapelt, welche zu der Arbeitsachse geneigt ist. Bevorzugt ist die Stapelrichtung rechtwinklig zu der Arbeitsachse geneigt.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Unter einem weichmagnetischen Material im Sinne der Erfindung ist ein Material zu verstehen, welches eine hohe magnetische Sättigungsflussdichte aufweist und somit ein das Material durchsetzendes Magnetfeld verstärkt. Insbesondere weist das weichmagnetische Material des Rahmens eine Sättigungsflussdichte von mindestens 1,0 T, bevorzugt mindestens 1,3 T, besonders bevorzugt mindestens 2 T, auf. Unter einem elektrisch leitenden Material im Sinne der Erfindung ist ein Material zu verstehen, welches eine hohe spezifische elektrische Leitfähigkeit aufweist, so dass ein das Material durchsetzendes Magnetfeld in dem Material Wirbelströme erzeugt. Insbesondere weist das elektrisch leitende Material des Rahmens eine spezifische elektrische Leitfähigkeit von mindestens 10⁴ S/m, bevorzugt mindestens 10⁵ S/m, besonders bevorzugt mindestens 10⁶ S/m, auf. Das weichmagnetische und elektrisch leitende Material des Rahmens besteht bevorzugt aus einem ferromagnetischen Material, besonders bevorzugt aus einem ferromagnetischen Metall, beispielsweise Eisen, Kobalt, Nickel, oder einer Legierung mit einem oder mehreren ferromagnetischen Metallen als Hauptbestandteil.

Unter einer Unterbrechung im Sinne der Erfindung ist ein Bereich zu verstehen, welcher eine wesentlich geringere spezifische elektrische Leitfähigkeit aufweist als das elektrisch leitende Material des Rahmens, so dass ein in dem Rahmen fliessender elektrischer Strom unterdrückt oder unterbrochen ist. Insbesondere weist die Unterbrechung eine spezifische elektrische Leitfähigkeit von höchstens 10² S/m, bevorzugt höchstens 10° S/m, besonders bevorzugt höchstens 10⁻² S/m, auf. Bevorzugt umfasst die Unterbrechung einen Spalt, beispielsweise einen Luftspalt oder Vakuumspalt, oder ein elektrisch nichtleitendes, gasförmiges, flüssiges und/oder festes Material, beispielsweise Kunststoff, Keramik, Glas oder dergleichen. Die Unterbrechungen werden bevorzugt mittels "Electro-chemical Machining", Sägen beispielsweise mit einer Trennscheibe, Fräsen, Erodieren, Wasserstrahlschneiden, Ätzen oder Laserschneiden erzeugt.

Die zumindest eine Unterbrechung erstreckt sich über einen wesentlichen Teil der bezüglich der Arbeitsachse radialen Ausdehnung des Rahmens und bevorzugt auch über einen wesentlichen Teil einer bezüglich der Arbeitsachse axialen Richtung, so dass ein in einer bezüglich der Arbeitsachse umlaufenden Richtung in dem Rahmen fliessender elektrischer Strom unterdrückt oder unterbrochen ist. Bevorzugt wird der Rahmen in der radialen Richtung und/oder in der axialen Richtung vollständig von der zumindest einen Unterbrechung durchsetzt. Unter einem wesentlichen Teil einer radialen oder axialen Ausdehnung des Rahmens sind bevorzugt mindestens 50%, besonders bevorzugt mindestens 80%, besonders bevorzugt mindestens 90% der radialen beziehungsweise axialen Ausdehnung des Rahmens zu verstehen. Eine Dicke der Unterbrechungen in einer Unterbrechungsrichtung beträgt bevorzugt zwischen 0,3 mm und 0,8 mm, besonders bevorzugt zwischen 0,4 mm und 0,5 mm.

Eine vorteilhafte Ausgestaltung ist dadurch gekennzeichnet, dass das Arbeitsgerät als Setzgerät zum Eintreiben von Befestigungselementen in einen Untergrund ausgebildet ist, aufweisend eine Aufnahme, welche dafür vorgesehen ist, ein Befestigungselement aufzunehmen, wobei der Arbeitskolben dafür vorgesehen ist, ein in der Aufnahme aufgenommenes Befestigungselement entlang der Arbeitsachse in den Untergrund zu befördern, und wobei der Antrieb dafür vorgesehen ist, den Arbeitskolben entlang der Arbeitsachse auf das Befestigungselement zu anzutreiben.

Eine vorteilhafte Ausgestaltung ist dadurch gekennzeichnet, dass der Rahmen mindestens 4 und/oder höchstens 50 Unterbrechungen, bevorzugt höchstens 36 Unterbrechungen aufweist, welche sich über einen wesentlichen Teil der radialen Ausdehnung des Rahmens erstrecken. Dadurch ist eine ausreichende mechanische Stabilität des Rahmens gewährleistet.

Eine vorteilhafte Ausgestaltung ist dadurch gekennzeichnet, dass sich die eine oder mehreren Unterbrechungen über mindestens 80% der radialen Ausdehnung des Rahmens, bevorzugt über mindestens 90% der radialen Ausdehnung des Rahmens erstrecken. Eine vorteilhafte Ausgestaltung ist dadurch gekennzeichnet, dass sich die eine oder mehreren Unterbrechungen bis zu einem inneren Rand der radialen Ausdehnung des Rahmens erstrecken. Eine weitere vorteilhafte Ausgestaltung ist dadurch gekennzeichnet, dass sich die eine oder mehreren Unterbrechungen bis zu einem äusseren Rand der radialen Ausdehnung des Rahmens erstrecken.

Eine vorteilhafte Ausgestaltung ist dadurch gekennzeichnet, dass sich die eine oder mehreren Unterbrechungen über mindestens 80% einer bezüglich der Arbeitsachse axialen Ausdehnung des Rahmens, bevorzugt über mindestens 90% der axialen Ausdehnung des Rahmens erstrecken. Eine vorteilhafte Ausgestaltung ist dadurch gekennzeichnet, dass sich die eine oder mehreren Unterbrechungen bis zu einem stirnseitigen Rand einer bezüglich der Arbeitsachse axialen Ausdehnung des Rahmens erstrecken.

Eine vorteilhafte Ausgestaltung ist dadurch gekennzeichnet, dass die eine oder mehreren Unterbrechungen den Rahmen vollständig durchsetzen.

Eine vorteilhafte Ausgestaltung ist dadurch gekennzeichnet, dass die eine oder mehreren Unterbrechungen schlitzförmig sind.

Eine vorteilhafte Ausgestaltung ist dadurch gekennzeichnet, dass die eine oder mehreren Unterbrechungen mit einem Gas, insbesondere Luft, oder einer Flüssigkeit gefüllt oder evakuiert sind.

Eine vorteilhafte Ausgestaltung ist dadurch gekennzeichnet, dass die eine oder mehreren Unterbrechungen aus einem nichtleitenden Material bestehen. Ein spezifischer elektrischer Widerstand der Unterbrechungen beträgt bevorzugt mindestens 0,12 µΩm, besonders bevorzugt mindestens 0,3 µΩm und/oder höchstens 0,9 µΩm.

Eine vorteilhafte Ausgestaltung ist dadurch gekennzeichnet, dass der Rahmen aus einem Metall oder einer Legierung besteht. Bevorzugt besteht der Rahmen aus einem Stahl, besonders bevorzugt aus einem Stahl mit einem Eisenanteil von mindestens 95% und/oder mit einem Siliziumgehalt von zwischen 1% und 3%.

Eine vorteilhafte Ausgestaltung ist dadurch gekennzeichnet, dass sich die eine oder mehreren Unterbrechungen in der radialen Richtung erstrecken. Eine weitere vorteilhafte Ausgestaltung ist dadurch gekennzeichnet, dass sich die eine oder mehreren Unterbrechungen zu der radialen Richtung geneigt erstrecken.

Eine vorteilhafte Ausgestaltung ist dadurch gekennzeichnet, dass sich die eine oder mehreren Unterbrechungen in einer bezüglich der Arbeitsachse axialen Richtung erstrecken. Eine weitere vorteilhafte Ausgestaltung ist dadurch gekennzeichnet, dass sich die eine oder mehreren Unterbrechungen zu einer bezüglich der Arbeitsachse axialen Richtung geneigt erstrecken.

Eine vorteilhafte Ausgestaltung ist dadurch gekennzeichnet, dass die Lagen des weichmagnetischen und elektrisch leitenden Materials um eine Wickelachse aufgewickelt sind. Bevorzugt ist die Wickelachse parallel zu der Arbeitsachse orientiert. Eine alternative Ausgestaltung ist dadurch gekennzeichnet, dass die Lagen des weichmagnetischen und elektrisch leitenden Materials im Wesentlichen eben sind.

Eine vorteilhafte Ausgestaltung ist dadurch gekennzeichnet, dass der Antrieb einen Schaltkreislauf umfasst, mittels dessen die Schnellentladung ausgelöst wird.

In den Zeichnungen ist die Erfindung in mehreren Ausführungsbeispielen dargestellt.

Es zeigen:
Fig. 1 ein Setzgerät in einem Längsschnitt,
Fig. 2 einen Antrieb eines Setzgeräts in einem Längsschnitt,
Fig. 3 einen Rahmen in einer perspektivischen Ansicht,
Fig. 4 einen Rahmen in einer perspektivischen Ansicht,
Fig. 5 einen Rahmen in einer perspektivischen Ansicht,
Fig. 6 einen Rahmen in einer perspektivischen Ansicht,
Fig. 7 einen Rahmen in einer perspektivischen Ansicht,
Fig. 8 ein Segment eines Rahmens in einer perspektivischen Ansicht,
Fig. 9 einen Rahmen in einer perspektivischen Ansicht,
Fig. 10 einen Rahmen in einer perspektivischen Ansicht,
Fig. 11 einen Rahmen in einer perspektivischen Ansicht,
Fig. 12 einen Rahmen in einer perspektivischen Ansicht,
Fig. 13einen Rahmen in einer perspektivischen Ansicht,
Fig. 14 einen Rahmen in einem perspektivischen Längsschnitt,
Fig. 15 einen Rahmen in einer perspektivischen Ansicht und
Fig. 16 einen Rahmen in einer perspektivischen Ansicht.

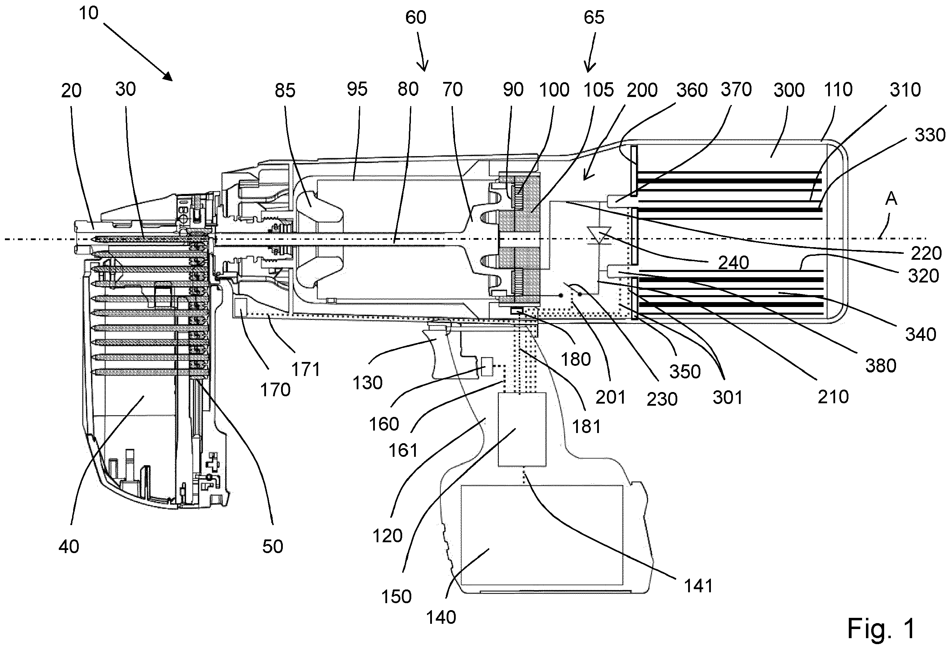

In Fig. 1 ist ein handgeführtes Setzgerät 10 zum Eintreiben von Befestigungselementen in einen nicht gezeigten Untergrund in einem Längsschnitt dargestellt. Das Setzgerät 10 weist eine als Bolzenführung ausgebildete Aufnahme 20 auf, in welcher ein als Nagel ausgebildetes Befestigungselement 30 aufgenommen ist, um entlang einer Setzachse A in den Untergrund eingetrieben zu werden (in Fig. 1 nach links). Für eine Zuführung von Befestigungselementen zu der Aufnahme umfasst das Setzgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf. Das Setzgerät 10 weist einen Arbeitskolben 60 auf, welcher einen Kolbenteller 70 und eine Kolbenstange 80 umfasst. Der Arbeitskolben 60 ist dafür vorgesehen, das Befestigungselement 30 aus der Aufnahme 20 heraus entlang der Setzachse A in den Untergrund zu befördern. Hierbei ist der Arbeitskolben 60 mit seinem Kolbenteller 70 in einem Führungszylinder 95 entlang der Setzachse A geführt.

Der Arbeitskolben 60 wird seinerseits von einem Antrieb 65 angetrieben, welcher einen an dem Kolbenteller 70 angeordneten Kurzschlussläufer 90, eine Erregerspule 100, einen weichmagnetischen Rahmen 105, einen Schaltkreislauf 200 und einen Kondensator 300 mit einem Innenwiderstand von 5 mOhm umfasst. Der Kurzschlussläufer 90 besteht aus einem bevorzugt ringförmigen, besonders bevorzugt kreisringförmigen Element mit einem geringen elektrischen Widerstand, beispielsweise aus Kupfer, und ist auf der von der Aufnahme 20 abgewandten Seite des Kolbentellers 70 an dem Kolbenteller 70 befestigt, beispielsweise angeschraubt, genietet, verlötet, verschweisst, verklebt, geklemmt oder formschlüssig verbunden. Bei nicht gezeigten Ausführungsbeispielen ist der Kolbenteller selbst als Kurzschlussläufer ausgebildet. Der Schaltkreislauf 200 ist dafür vorgesehen, eine elektrische Schnellentladung des zuvor aufgeladenen Kondensators 300 herbeizuführen und den dabei fliessenden Entladestrom durch die Erregerspule 100 zu leiten, welche in dem Rahmen 105 eingebettet ist.

In einer setzbereiten Position des Arbeitskolbens 60 (Fig. 1) taucht der Arbeitskolben 60 mit dem Kolbenteller 70 so in eine nicht näher bezeichnete ringförmige Vertiefung des Rahmens 105 ein, dass der Kurzschlussläufer 90 in geringem Abstand gegenüber der Erregerspule 100 angeordnet ist. Dadurch durchsetzt ein Erregermagnetfeld, welches durch eine Änderung eines durch die Erregerspule fliessenden elektrischen Erregerstroms erzeugt wird, den Kurzschlussläufer 90 und induziert in dem Kurzschlussläufer 90 seinerseits einen ringförmig umlaufenden elektrischen Sekundärstrom. Dieser sich aufbauende und damit sich ändernde Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche den Arbeitskolben 60 auf die Aufnahme 20 sowie das darin aufgenommene Befestigungselement 30 zu antreibt.

Das Setzgerät 10 umfasst weiterhin ein Gehäuse 110, in welchem der Antrieb 65 aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, ein als an dem Rahmen 105 angeordneter Temperatursensor 180 ausgebildetes Mittel zur Erfassung einer Temperatur der Erregerspule 100 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Setzgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Setzgerät 10 an einen nicht gezeigten Untergrund (in Fig. 1 nach links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und der Arbeitskolben 60 in seiner in Fig. 1 dargestellten setzbereiten Position ist, befindet sich das Setzgerät 10 in einem setzbereiten Zustand. Dadurch, dass die Aufladung des Kondensators 300 erst durch das Anpressen des Setzgeräts 10 an den Untergrund bewirkt wird, ist zur Erhöhung der Sicherheit von umstehenden Personen ein Setzvorgang nur dann ermöglicht, wenn das Setzgerät 10 an den Untergrund angepresst ist. Bei nicht gezeigten Ausführungsbeispielen leitet die Steuereinheit den Kondensator-Aufladevorgang bereits bei einem Einschalten des Setzgeräts oder bei einem Abheben des Setzgeräts von dem Untergrund oder bei Beendigung eines vorausgegangenen Eintreibvorgangs ein.

Wenn bei setzbereitem Setzgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu der Erregerspule 100 geleitet wird, indem der Kondensator 300 entladen wird.

Der in Fig. 1 schematisch dargestellte Schaltkreislauf 200 umfasst hierzu zwei Entladeleitungen 210, 220, welche den Kondensator 300 mit der Erregerspule 100 verbinden und von denen zumindest eine Entladeleitung 210 von einem normalerweise geöffneten Entladeschalter 230 unterbrochen ist. Der Schaltkreislauf 200 bildet mit der Erregerspule 100 und dem Kondensator 300 einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs 65 aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch die Erregerspule 100 fliesst. Der schnell ansteigende Entladestrom induziert ein Erregermagnetfeld, welches den Kurzschlussläufer 90 durchsetzt und in dem Kurzschlussläufer 90 seinerseits einen ringförmig umlaufenden elektrischen Sekundärstrom induziert. Dieser sich aufbauende Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche den Arbeitskolben 60 auf die Aufnahme 20 sowie das darin aufgenommene Befestigungselement 30 zu antreibt. Sobald die Kolbenstange 80 des Arbeitskolbens 60 auf einen nicht näher bezeichneten Kopf des Befestigungselements 30 trifft, wird das Befestigungselement 30 von dem Arbeitskolben 60 in den Untergrund eingetrieben. Überschüssige Bewegungsenergie des Arbeitskolbens 60 wird von einem Bremselement 85 aus einem federelastischen und/oder dämpfenden Material, beispielsweise Gummi oder einem Elastomer, aufgenommen, indem sich der Arbeitskolben 60 mit seinem Kolbenteller 70 gegen das Bremselement 85 bewegt und von diesem bis zu einem Stillstand abgebremst wird. Danach wird der Arbeitskolben 60 von einer nicht näher bezeichneten Rückstellvorrichtung in die setzbereite Position zurückgestellt.

Der Kondensator 300, insbesondere sein Schwerpunkt, ist auf der Setzachse A hinter dem Eintreibelement 60 angeordnet, wohingegen die Aufnahme 20 vor dem Eintreibelement 60 angeordnet ist. In Bezug auf die Setzachse A ist der Kondensator 300 also axial versetzt zu dem Eintreibelement 60 und radial überlappend mit dem Eintreibelement 60 angeordnet. Dadurch lässt sich einerseits eine geringe Länge der Entladeleitungen 210, 220 verwirklichen, wodurch sich deren Widerstände reduzieren und damit ein Wirkungsgrad des Antriebs 65 erhöhen lässt. Andererseits lässt sich ein geringer Abstand eines Schwerpunkts des Setzgeräts 10 zur Setzachse A verwirklichen. Dadurch sind Kippmomente bei einem Rückstoss des Setzgeräts 10 während eines Eintreibvorgangs gering. Bei einem nicht gezeigten Ausführungsbeispiel ist der Kondensator um das Eintreibelement herum angeordnet.

Die Elektroden 310, 320 sind auf einander gegenüberliegenden Seiten an einer um eine Wickelachse aufgewickelten Trägerfolie 330 angeordnet, beispielsweise durch Metallisierung der Trägerfolie 330, insbesondere aufgedampft, wobei die Wickelachse mit der Setzachse A zusammenfällt. Bei nicht gezeigten Ausführungsbeispielen ist die Trägerfolie mit den Elektroden so um die Wickelachse gewickelt, dass ein Durchlass entlang der Wickelachse verbleibt. Insbesondere in diesem Fall ist der Kondensator beispielsweise um die Setzachse herum angeordnet. Die Trägerfolie 330 weist bei einer Ladespannung des Kondensators 300 von 1500 V eine Foliendicke zwischen 2,5 µm und 4,8 µm, bei einer Ladespannung des Kondensators 300 von 3000 V eine Foliendicke von beispielsweise 9,6 µm auf. Bei nicht gezeigten Ausführungsbeispielen ist die Trägerfolie ihrerseits aus zwei oder mehr übereinandergeschichteten Einzelfolien zusammengesetzt. Die Elektroden 310, 320 weisen einen Schichtwiderstand von 50 Ohm/□ auf.

Eine Oberfläche des Kondensators 300 hat die Form eines Zylinders, insbesondere Kreiszylinders, dessen Zylinderachse mit der Setzachse A zusammenfällt. Eine Höhe dieses Zylinders in Richtung der Wickelachse ist im Wesentlichen so gross wie sein senkrecht zur Wickelachse gemessener Durchmesser. Durch ein geringes Verhältnis von Höhe zu Durchmesser des Zylinders werden ein geringer Innenwiderstand bei relativ hoher Kapazität des Kondensators 300 und nicht zuletzt eine kompakte Bauweise des Setzgeräts 10 erreicht. Ein geringer Innenwiderstand des Kondensators 300 wird auch durch einen grossen Leitungsquerschnitt der Elektroden 310, 320 erreicht, insbesondere durch eine hohe Schichtdicke der Elektroden 310, 320, wobei die Auswirkungen der Schichtdicke auf einen Selbstheilungseffekt und/oder eine Lebensdauer des Kondensators 300 zu berücksichtigen sind.

Der Kondensator 300 ist mittels eines Dämpfelements 350 gedämpft an dem übrigen Setzgerät 10 gelagert. Das Dämpfelement 350 dämpft Bewegungen des Kondensators 300 relativ zum übrigen Setzgerät 10 entlang der Setzachse A. Das Dämpfelement 350 ist an der Stirnseite 360 des Kondensators 300 angeordnet und bedeckt die Stirnseite 360 vollständig. Dadurch werden die einzelnen Wicklungen der Trägerfolie 330 von einem Rückstoss des Setzgeräts 10 gleichmässig belastet. Die elektrischen Kontakte 370, 380 ragen dabei von der Stirnfläche 360 ab und durchdringen das Dämpfelement 350. Das Dämpfelement 350 weist zu diesem Zweck jeweils eine Freistellung auf, durch welche die elektrischen Kontakte 370, 380 hindurchragen. Die Verbindungsleitungen 301 weisen zum Ausgleich von Relativbewegungen zwischen dem Kondensator 300 und dem übrigen Setzgerät 10 jeweils eine nicht näher dargestellte Entlastungs- und/oder Dehnungsschlaufe auf. Bei nicht gezeigten Ausführungsbeispielen ist ein weiteres Dämpfelement an dem Kondensator angeordnet, beispielsweise an dessen von der Aufnahme abgewandten Stirnseite. Bevorzugt ist der Kondensator dann zwischen zwei Dämpfelementen eingespannt, das heisst die Dämpfelemente liegen mit einer Vorspannung an dem Kondensator an. Bei weiteren nicht gezeigten Ausführungsbeispielen weisen die Verbindungsleitungen eine Steifigkeit auf, welche mit zunehmendem Abstand vom Kondensator kontinuierlich abnimmt.

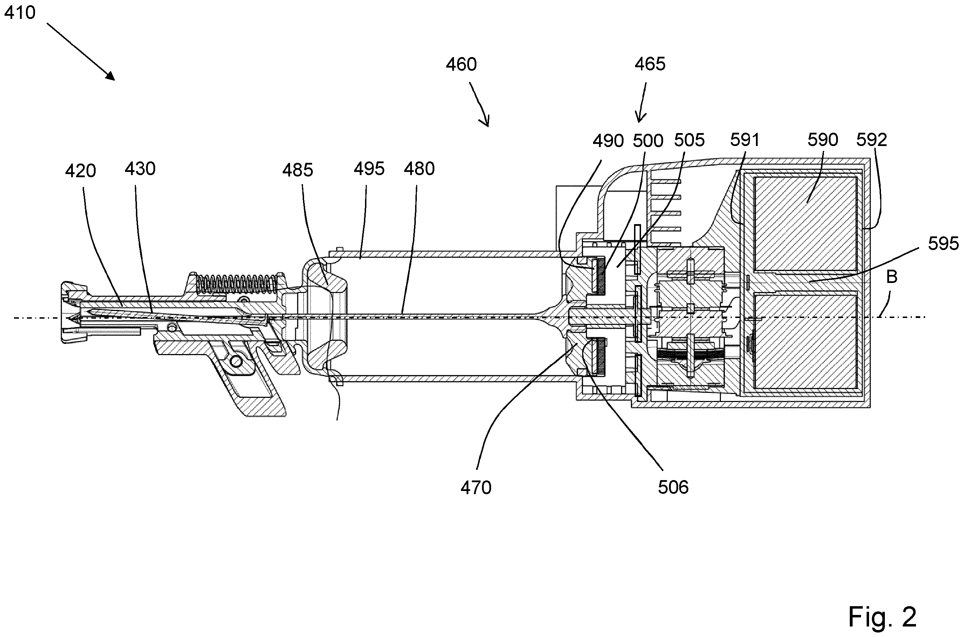

In Fig. 2 ist ein Setzgerät 410 zum Eintreiben von Befestigungselementen in einen nicht gezeigten Untergrund in einem Längsschnitt teilweise dargestellt. Das Setzgerät 410 weist eine als Bolzenführung ausgebildete Aufnahme 420 auf, in welcher ein als Nagel ausgebildetes Befestigungselement 430 aufgenommen ist, um entlang einer Setzachse B in den Untergrund eingetrieben zu werden (in Fig. 2 nach links). Das Setzgerät 410 umfasst einen Arbeitskolben 460 mit einem Kolbenteller 470 und einer Kolbenstange 480, welcher in einem Führungszylinder 495 entlang der Setzachse B geführt ist. Der Arbeitskolben 460 wird von einem Antrieb 465 angetrieben, welcher einen an dem Kolbenteller 470 angeordneten Kurzschlussläufer 490, eine Erregerspule 500, einen weichmagnetischen Rahmen 505, einen nicht näher bezeichneten Schaltkreislauf und einen Kondensator 590 umfasst. Der Kurzschlussläufer 490 ist auf der von der Aufnahme 420 abgewandten Seite des Kolbentellers 470 an dem Kolbenteller 470 befestigt.

Der Kondensator 590 ist auf der Setzachse B hinter dem Eintreibelement 460 angeordnet, wohingegen die Aufnahme 420 vor dem Eintreibelement 460 angeordnet ist. In Bezug auf die Setzachse B ist der Kondensator 590 axial und radial versetzt, aber radial überlappend, zu dem Eintreibelement 460 angeordnet. Der Kondensator 590 ist mittels eines Dämpfelements 595 gedämpft an dem übrigen Setzgerät 410 gelagert, wobei sich das Dämpfelement 595 von einer der Aufnahme 420 zugewandten Stirnseite 591 des Kondensators 590 bis zu einer von der Aufnahme 420 abgewandten Stirnseite 592 des Kondensators 590 erstreckt.

In einer setzbereiten Position des Arbeitskolbens 460 (Fig. 2) taucht der Arbeitskolben 460 mit dem Kolbenteller 470 so in eine ringförmige Vertiefung 506 des Rahmens 505 ein, dass der Kurzschlussläufer 490 in geringem Abstand gegenüber der Erregerspule 500 angeordnet ist. Bei nicht gezeigten Ausführungsbeispielen ist der Kurzschlussläufer in geringem Abstand gegenüber der Erregerspule angeordnet, ohne in eine Vertiefung des Rahmens einzutauchen. Am Ende eines Setzvorgangs trifft der Arbeitskolben 460 insbesondere mit seinem Kolbenteller 470 unter Umständen auf ein Bremselement 485 und wird danach, insbesondere unmittelbar anschliessend, von einer nicht näher bezeichneten Rückstellvorrichtung in die setzbereite Position zurückgestellt.

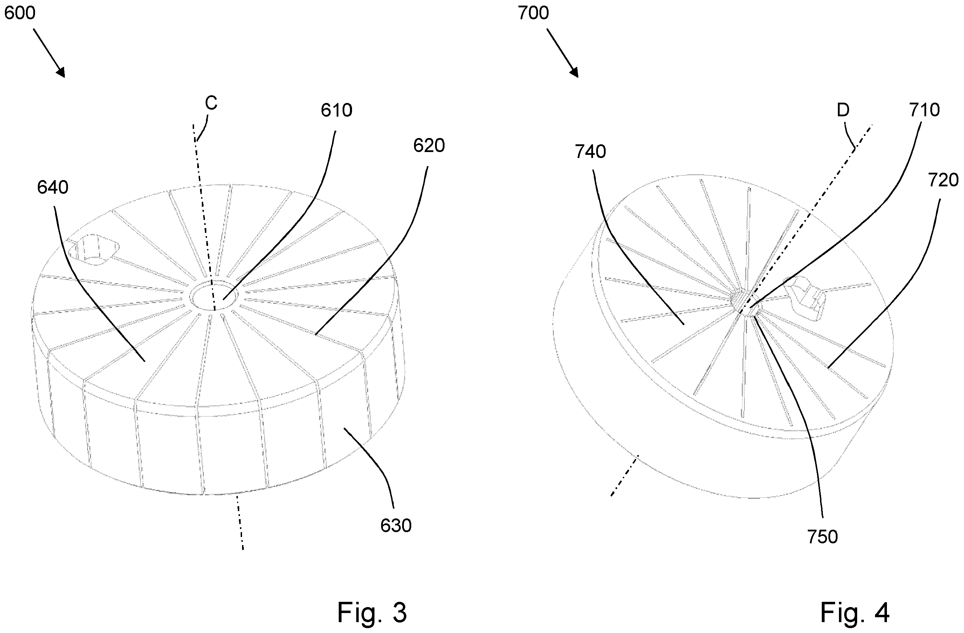

In Fig. 3 ist ein Rahmen 600 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 600 besteht aus einem Metall, beispielsweise Eisen, oder einer Legierung, beispielsweise einem Stahl mit einer Sättigungsdichte von 1,6 T und einer spezifischen elektrischen Leitfähigkeit von 8 x 10⁶ S/m, und hat eine im Wesentlichen zylindrische, insbesondere kreiszylindrische Aussenkontur und erstreckt sich bezüglich einer Arbeitsachse C des Arbeitsgeräts in einer umlaufenden Richtung. Insbesondere fällt eine Zylinderachse der Aussenkontur mit der Arbeitsachse C zusammen. Der Rahmen 600 besteht aus einem weichmagnetischen und elektrisch leitenden Material und weist einen bezüglich der Arbeitsachse C zentralen Durchbruch 610 auf, welcher den Rahmen 600 in einer bezüglich der Arbeitsachse C axialen Richtung vollständig durchsetzt.

Weiterhin weist der Rahmen 600 achtzehn Unterbrechungen 620 auf, welche sich über 94% einer bezüglich der Arbeitsachse C radialen Ausdehnung des Rahmens 600 erstrecken und den Rahmen 600 in der axialen Richtung vollständig durchsetzen. Die Unterbrechungen 620 sind schlitzförmig, insbesondere als Luftschlitze, ausgebildet und erstrecken sich bis zu einem äusseren Rand 630 der radialen Ausdehnung des Rahmens 600, so dass der Rahmen 600 von aussen geschlitzt ist. Bei nicht gezeigten Ausführungsbeispielen sind die Unterbrechungen mit einem anderen Gas oder einer Flüssigkeit gefüllt oder evakuiert. Bei weiteren nicht gezeigten Ausführungsbeispielen bestehen die Unterbrechungen aus einem nichtleitenden Material, beispielsweise einer Vergussmasse aus Kunststoff, Gummi, Klebstoff oder dergleichen. Die Unterbrechungen 620 erstrecken sich in der axialen Richtung bis zu einem in Fig. 3 verdeckten vorderen stirnseitigen Rand des Rahmens 600 sowie bis zu einem rückwärtigen stirnseitigen Rand 640 des Rahmens 600, so dass der Rahmen 600 axial vollständig von den Unterbrechungen 620 durchsetzt wird. Die Unterbrechungen 620 erstrecken sich in der radialen Richtung und in der axialen Richtung und sind nicht zu der radialen Richtung oder der axialen Richtung geneigt.

Die Unterbrechungen 620 bewirken ein Unterdrücken von Wirbelströmen in dem Rahmen 600, so dass unerwünschte Magnetfelder, welche von Wirbelströmen erzeugt werden könnten, reduziert und ein Wirkungsgrad des Antriebs und des Arbeitsgeräts erhöht sind.

In Fig. 4 ist ein Rahmen 700 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 700 hat eine im Wesentlichen zylindrische, insbesondere kreiszylindrische Aussenkontur und erstreckt sich bezüglich einer Arbeitsachse D des Arbeitsgeräts in einer umlaufenden Richtung. Insbesondere fällt eine Zylinderachse der Aussenkontur mit der Arbeitsachse D zusammen. Der Rahmen 700 besteht aus einem weichmagnetischen und elektrisch leitenden Material und weist einen bezüglich der Arbeitsachse D zentralen Durchbruch 710 auf, welcher den Rahmen 700 in einer bezüglich der Arbeitsachse D axialen Richtung vollständig durchsetzt.

Weiterhin weist der Rahmen 700 sechzehn Unterbrechungen 720 auf, welche sich über 96% einer bezüglich der Arbeitsachse D radialen Ausdehnung des Rahmens 700 erstrecken und den Rahmen 700 in der axialen Richtung vollständig durchsetzen. Die Unterbrechungen 720 sind schlitzförmig ausgebildet und erstrecken sich bis zu einem inneren Rand 750 der radialen Ausdehnung des Rahmens 700, so dass der Rahmen 700 von innen geschlitzt ist. Die Unterbrechungen 720 erstrecken sich in der axialen Richtung bis zu einem in Fig. 4 verdeckten vorderen stirnseitigen Rand des Rahmens 700 sowie bis zu einem rückwärtigen stirnseitigen Rand 740 des Rahmens 700, so dass der Rahmen 700 axial vollständig von den Unterbrechungen 720 durchsetzt wird. Die Unterbrechungen 720 erstrecken sich in der radialen Richtung und in der axialen Richtung und sind nicht zu der radialen Richtung oder der axialen Richtung geneigt.

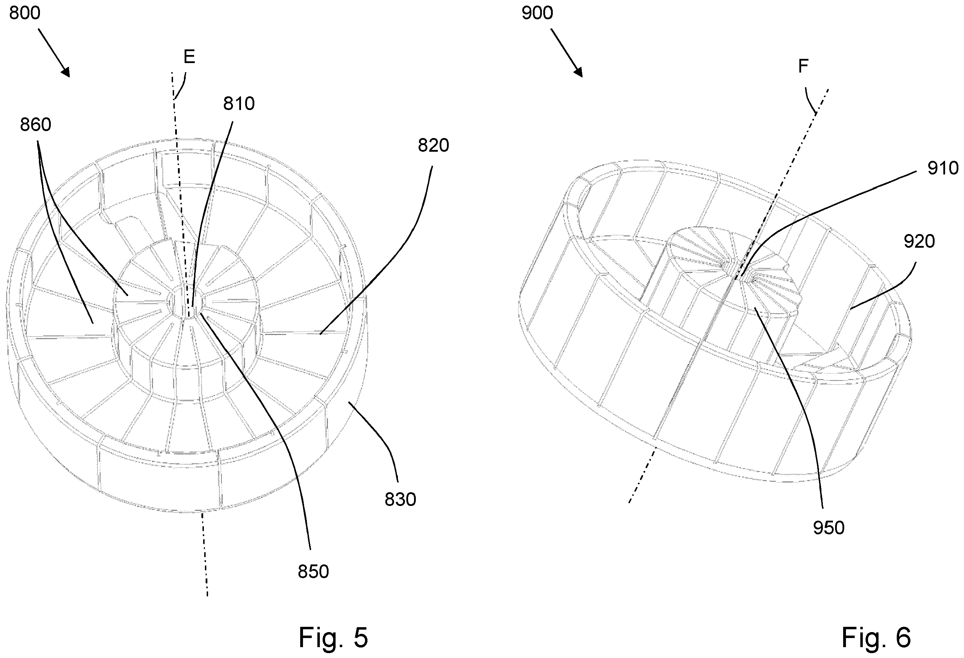

In Fig. 5 ist ein Rahmen 800 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 800 hat eine im Wesentlichen zylindrische, insbesondere kreiszylindrische Aussenkontur und erstreckt sich bezüglich einer Arbeitsachse E des Arbeitsgeräts in einer umlaufenden Richtung. Insbesondere fällt eine Zylinderachse der Aussenkontur mit der Arbeitsachse E zusammen. Der Rahmen 800 besteht aus einem weichmagnetischen und elektrisch leitenden Material und weist einen bezüglich der Arbeitsachse E zentralen Durchbruch 810 auf, welcher den Rahmen 800 in einer bezüglich der Arbeitsachse E axialen Richtung vollständig durchsetzt.

Weiterhin weist der Rahmen 800 achtzehn Unterbrechungen 820 auf, welche sich über 95% einer bezüglich der Arbeitsachse E radialen Ausdehnung des Rahmens 800 erstrecken und den Rahmen 800 in der axialen Richtung vollständig durchsetzen. Die Unterbrechungen 820 sind schlitzförmig ausgebildet und erstrecken sich abwechselnd bis zu einem äusseren Rand 830 und bis zu einem inneren Rand 850 der radialen Ausdehnung des Rahmens 800, so dass der Rahmen 800 abwechselnd von aussen und von innen geschlitzt ist. Die Unterbrechungen 820 erstrecken sich in der axialen Richtung bis zu einem vorderen stirnseitigen Rand 860 des Rahmens 800 sowie bis zu einem in Fig. 5 verdeckten rückwärtigen stirnseitigen Rand des Rahmens 800, so dass der Rahmen 800 axial vollständig von den Unterbrechungen 820 durchsetzt wird. Die Unterbrechungen 820 erstrecken sich in der radialen Richtung und in der axialen Richtung und sind nicht zu der radialen Richtung oder der axialen Richtung geneigt.

In Fig. 6 ist ein Rahmen 900 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 900 hat eine im Wesentlichen zylindrische, insbesondere kreiszylindrische Aussenkontur und erstreckt sich bezüglich einer Arbeitsachse F des Arbeitsgeräts in einer umlaufenden Richtung. Insbesondere fällt eine Zylinderachse der Aussenkontur mit der Arbeitsachse F zusammen. Der Rahmen 900 besteht aus einem weichmagnetischen und elektrisch leitenden Material und weist einen bezüglich der Arbeitsachse F zentralen Durchbruch 910 auf, welcher den Rahmen 900 in einer bezüglich der Arbeitsachse F axialen Richtung vollständig durchsetzt.

Weiterhin weist der Rahmen 900 achtzehn Unterbrechungen 920 auf, welche den Rahmen 900 in einer bezüglich der Arbeitsachse F radialen Richtung vollständig durchsetzen und sich über 94% einer Ausdehnung des Rahmens 900 in der axialen Richtung erstrecken. Die Unterbrechungen 920 sind schlitzförmig ausgebildet und erstrecken sich in der axialen Richtung bis zu einem vorderen stirnseitigen Rand 950 der radialen Ausdehnung des Rahmens 900, so dass der Rahmen 900 von vorne geschlitzt ist. Die Unterbrechungen 920 erstrecken sich in der radialen Richtung und in der axialen Richtung und sind nicht zu der radialen Richtung oder der axialen Richtung geneigt.

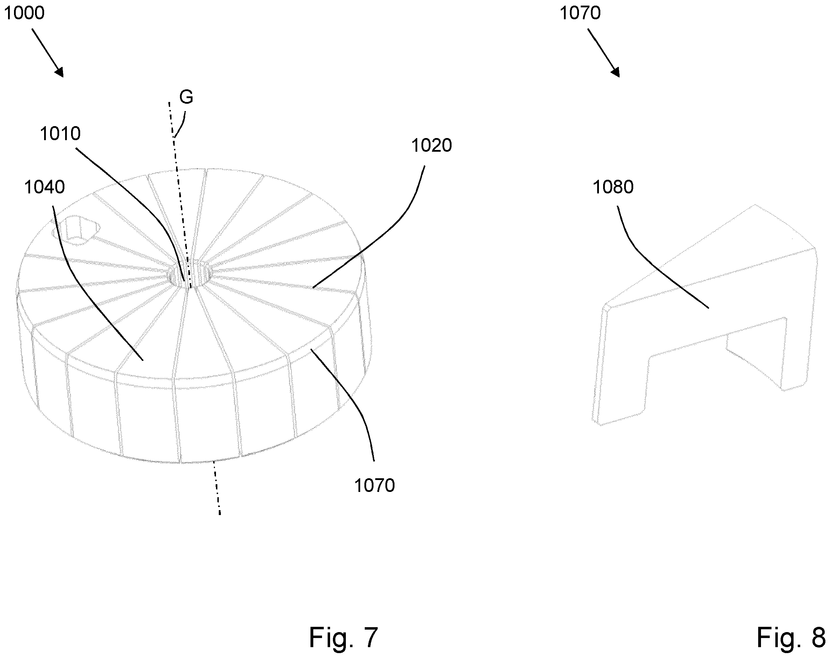

In Fig. 7 ist ein Rahmen 1000 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 1000 hat eine im Wesentlichen zylindrische, insbesondere kreiszylindrische Aussenkontur und erstreckt sich bezüglich einer Arbeitsachse G des Arbeitsgeräts in einer umlaufenden Richtung. Insbesondere fällt eine Zylinderachse der Aussenkontur mit der Arbeitsachse G zusammen. Der Rahmen 1000 besteht aus einem weichmagnetischen und elektrisch leitenden Material und weist einen bezüglich der Arbeitsachse G zentralen Durchbruch 1010 auf, welcher den Rahmen 1000 in einer bezüglich der Arbeitsachse G axialen Richtung vollständig durchsetzt.

Weiterhin weist der Rahmen 1000 achtzehn Unterbrechungen 1020 auf, welche den Rahmen 1000 vollständig durchsetzen, das heisst in einer bezüglich der Arbeitsachse G radialen Richtung und in der axialen Richtung vollständig durchsetzen, also von einem in Fig. 7 verdeckten vorderen stirnseitigen Rand des Rahmens 1000 bis zu einem rückwärtigen stirnseitigen Rand 1040 des Rahmens 700. Somit ist der Rahmen 1000 aus achtzehn einzelnen Segmenten 1070 aufgebaut, welche sich in der umlaufenden Richtung jeweils über einen Winkel von 20° erstrecken. Die Unterbrechungen 1020 erstrecken sich in der radialen Richtung und in der axialen Richtung und sind nicht zu der radialen Richtung oder der axialen Richtung geneigt.

In Fig. 8 ist ein solches Segment 1070 in einer perspektivischen Ansicht dargestellt. Das Segment 1070 ist auf seiner Oberfläche mit einer elektrisch nichtleitenden Schicht 1080 versehen, beispielsweise lackiert, um unerwünschte Wirbelströme über mehrere Segmente zu unterdrücken.

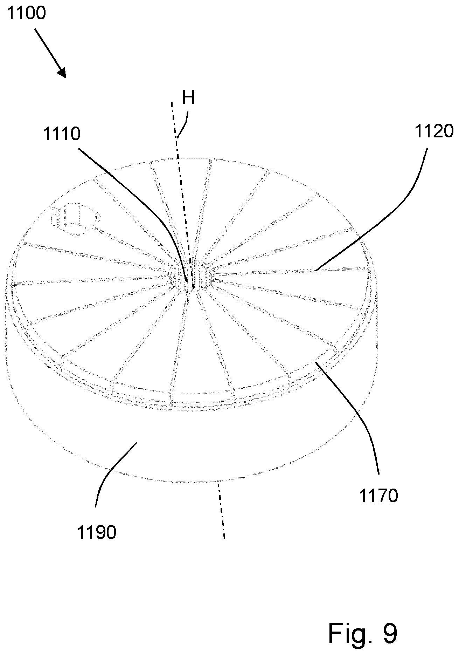

In Fig. 9 ist ein Rahmen 1100 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 1100 hat eine im Wesentlichen zylindrische, insbesondere kreiszylindrische Aussenkontur und erstreckt sich bezüglich einer Arbeitsachse H des Arbeitsgeräts in einer umlaufenden Richtung. Insbesondere fällt eine Zylinderachse der Aussenkontur mit der Arbeitsachse H zusammen. Der Rahmen 1100 besteht aus einem weichmagnetischen und elektrisch leitenden Material und weist einen bezüglich der Arbeitsachse H zentralen Durchbruch 1110 auf, welcher den Rahmen 1100 in einer bezüglich der Arbeitsachse H axialen Richtung vollständig durchsetzt.

Weiterhin weist der Rahmen 1100 achtzehn Unterbrechungen 1120 auf, welche den Rahmen 1100 vollständig durchsetzen, das heisst in einer bezüglich der Arbeitsachse H radialen Richtung und in der axialen Richtung vollständig durchsetzen. Somit ist der Rahmen 1100 aus achtzehn einzelnen Segmenten 1170 aufgebaut, welche sich in der umlaufenden Richtung jeweils über einen Winkel von 20° erstrecken. Die Unterbrechungen 1120 erstrecken sich in der radialen Richtung und in der axialen Richtung und sind nicht zu der radialen Richtung oder der axialen Richtung geneigt. Der Rahmen 1100 ist mit einem Stützelement 1190 versehen, welches insbesondere ringförmig ausgebildet ist und die Segmente 1170 an einem radial äusseren Rand umschliesst. Das Stützelement 1190 stützt die Segmente 1170 gegen radial nach aussen wirkende Kräfte ab, welche insbesondere während eines Betriebes beispielsweise aufgrund von Magnetfeldern auftreten. Das Stützelement 1190 besteht vorzugsweise aus einem elektrisch nichtleitenden Material, beispielsweise faserverstärktem Kunststoff, so dass unerwünschte Wirbelströme innerhalb des Stützelements 1190 vermieden werden.

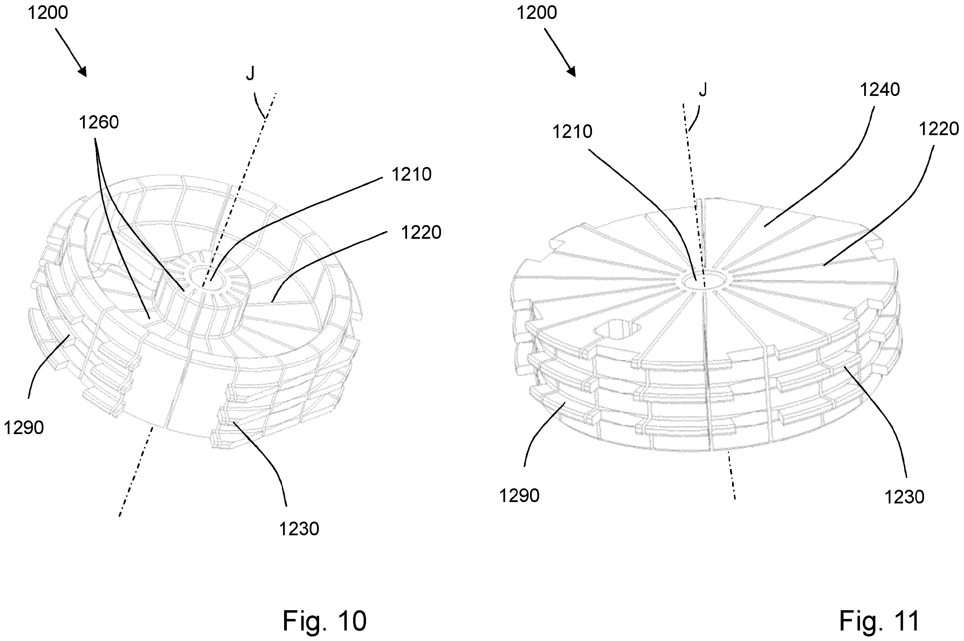

In Fig. 10 und Fig. 11 ist ein Rahmen 1200 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 1200 hat eine im Wesentlichen zylindrische, insbesondere kreiszylindrische Aussenkontur und erstreckt sich bezüglich einer Arbeitsachse J des Arbeitsgeräts in einer umlaufenden Richtung. Insbesondere fällt eine Zylinderachse der Aussenkontur mit der Arbeitsachse J zusammen. Der Rahmen 1200 besteht aus einem weichmagnetischen und elektrisch leitenden Material und weist einen bezüglich der Arbeitsachse J zentralen Durchbruch 1210 auf, welcher den Rahmen 1200 in einer bezüglich der Arbeitsachse J axialen Richtung vollständig durchsetzt.

Weiterhin weist der Rahmen 1200 achtzehn Unterbrechungen 1220 auf, welche schlitzförmig, insbesondere als Luftschlitze, ausgebildet sind und sich bis zu einem äusseren Rand 1230 der radialen Ausdehnung des Rahmens 1200 erstrecken, so dass der Rahmen 1200 von aussen geschlitzt ist. Die Unterbrechungen 1220 erstrecken sich in der axialen Richtung bis zu einem vorderen stirnseitigen Rand 1260 des Rahmens 1200 sowie bis zu einem rückwärtigen stirnseitigen Rand 1240 des Rahmens 1200, so dass der Rahmen 1200 axial vollständig von den Unterbrechungen 1220 durchsetzt wird. Die Unterbrechungen 1220 erstrecken sich in der radialen Richtung und in der axialen Richtung und sind nicht zu der radialen Richtung oder der axialen Richtung geneigt. Weiterhin weist der Rahmen 1200 Kühlelemente 1290 auf, welche an dem äusseren Rand 1230 angeordnet sind. Die Kühlelemente sind als Kühlrippen ausgebildet und bewirken eine Vergrösserung einer Oberfläche des Rahmens 1200 und unterstützen somit einen Wärmeübertrag zwischen dem Rahmen 1200 und seiner Umgebung. Bei nicht gezeigten Ausführungsbeispielen sind die Kühlelemente alternativ oder zusätzlich an dem vorderen stirnseitigen Rand und/oder an dem rückwärtigen stirnseitigen Rand angeordnet. Bei weiteren nicht gezeigten Ausführungsbeispielen sind die Kühlelemente als Stifte oder Noppen oder als Vertiefungen ausgebildet.

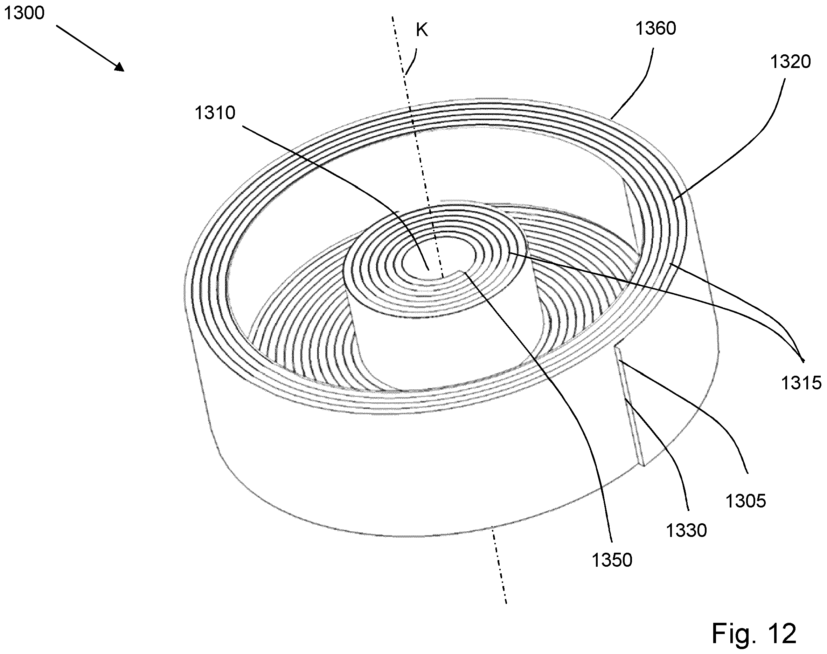

In Fig. 12 ist ein Rahmen 1300 in einer perspektivischen Ansicht dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 1300 hat eine im Wesentlichen zylindrische, insbesondere kreiszylindrische Aussenkontur und erstreckt sich bezüglich einer Arbeitsachse K des Arbeitsgeräts in einer umlaufenden Richtung. Insbesondere fällt eine Zylinderachse der Aussenkontur mit der Arbeitsachse K zusammen. Der Rahmen 1300 weist einen bezüglich der Arbeitsachse K zentralen Durchbruch 1310 auf, welcher den Rahmen 1300 in einer bezüglich der Arbeitsachse K axialen Richtung vollständig durchsetzt.

Der Rahmen 1300 ist aus einem biegbaren Blech 1305 aus einem weichmagnetischen und elektrisch leitenden Material gebildet, welches um eine Wickelachse aufgewickelt ist. Die Wickelachse ist dabei parallel zu der Arbeitsachse K orientiert und fällt insbesondere mit der Arbeitsachse K zusammen. Durch das Aufwickeln bildet das Blech 1305 eine Vielzahl von Lagen 1315, welche durch eine Vielzahl von Zwischenlagen voneinander getrennt und in einer Stapelrichtung aufeinandergestapelt sind, wobei die Stapelrichtung zu der Arbeitsachse K insbesondere rechtwinklig geneigt ist und überall etwa in einer bezüglich der Wickelachse radialen Richtung verläuft. Aufgrund der Stapelung, insbesondere in der erwähnten Stapelrichtung, stützen die Lagen 1315 eine nicht gezeigte, in den Rahmen 1300 eingebettete Erregerspule gegen radial nach aussen wirkende Kräfte ab, welche insbesondere während eines Betriebes beispielsweise aufgrund von Magnetfeldern auftreten.

Die Zwischenlagen bilden im Sinne der Erfindung eine einzige Unterbrechung 1320, welche bezüglich der Arbeitsachse K von innen nach aussen spiralförmig verläuft. Die Unterbrechung 1320 erstreckt sich bis zu einem äusseren Rand 1330 des Rahmens 1300 sowie bis zu einem inneren Rand 1350 des Rahmens, so dass der Rahmen 1300 radial vollständig von der Unterbrechung 1320 durchsetzt wird. Die Zwischenlagen erstrecken sich in der axialen Richtung bis zu einem vorderen stirnseitigen Rand 1360 des Rahmens 1300 sowie bis zu einem in Fig. 12 nicht sichtbaren rückwärtigen stirnseitigen Rand des Rahmens 1300, so dass der Rahmen 1300 axial vollständig von der Unterbrechung 1320 durchsetzt wird. Die Unterbrechung 1320 ist aufgrund ihrer Spiralform zu der radialen Richtung geneigt und erstreckt sich in der axialen Richtung und ist nicht zu der axialen Richtung geneigt.

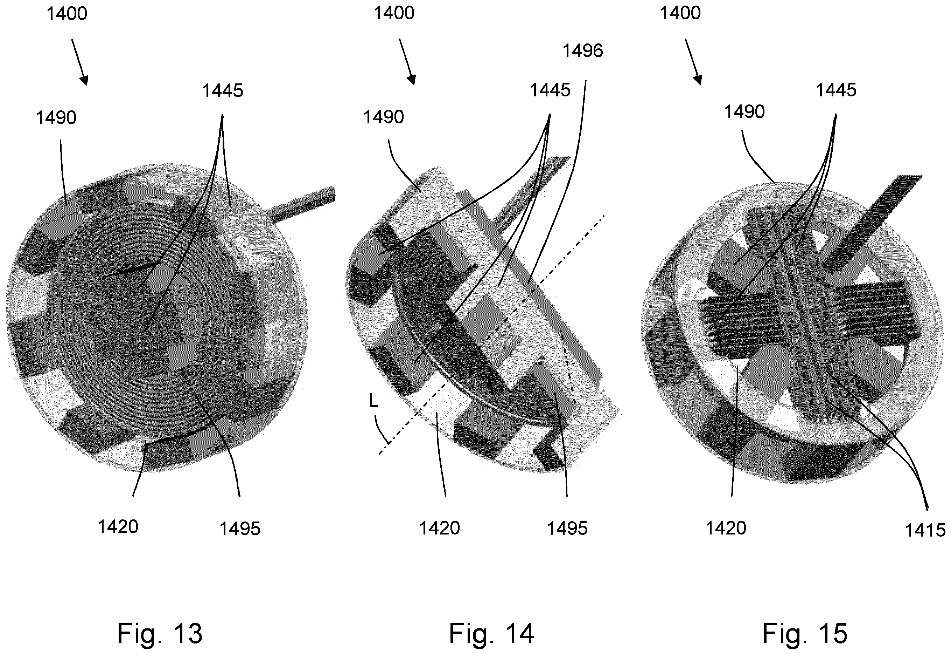

In Fig. 13, Fig. 14 und Fig. 15 ist ein Rahmen 1400 in einer perspektivischen Ansicht beziehungsweise in einem perspektivischen Längsschnitt (Fig. 14) dargestellt, welcher in ein nicht unter den Schutzumfang der Ansprüche fallendes Arbeitsgerät, beispielsweise in das in Fig. 1 gezeigte Setzgerät 10 oder das in Fig. 2 gezeigte Setzgerät 410, einsetzbar ist. Der Rahmen 1400 hat eine im Wesentlichen zylindrische, insbesondere kreiszylindrische Aussenkontur und erstreckt sich bezüglich einer Arbeitsachse L des Arbeitsgeräts in einer umlaufenden Richtung. Insbesondere fällt eine Zylinderachse der Aussenkontur mit der Arbeitsachse L zusammen.

Der Rahmen 1400 umfasst mehrere Teilblöcke 1445, welche jeweils aus mehreren ebenen Lagen 1415 aus einem weichmagnetischen und elektrisch leitenden Material gebildet sind und insbesondere sternförmig um die Arbeitsachse L angeordnet sind. Die Lagen 1415 sind beispielsweise durch Bleche gebildet. Die Lagen 1415 sind durch mehrere Zwischenlagen voneinander getrennt und in einer Stapelrichtung aufeinandergestapelt, welche zu der Arbeitsachse L insbesondere rechtwinklig geneigt und in dem jeweiligen Teilblock 1445 gleich, aber von Teilblock zu Teilblock unterschiedlich ist. Die Zwischenlagen sowie die Zwischenräume zwischen den Teilblöcken 1445 bilden Unterbrechungen 1420, welche den jeweiligen Teilblock 1445 vollständig durchsetzen, das heisst in einer zu der Arbeitsachse L senkrechten Richtung und in der axialen Richtung vollständig durchsetzen. Die Unterbrechungen 1420 erstrecken sich in der zu der Arbeitsachse L senkrechten Richtung und in der axialen Richtung und sind nicht zu der axialen Richtung geneigt. Die Lagen 1415 sind vorzugsweise mit einem elektrisch nichtleitenden Material beschichtet, so dass die Unterbrechungen 1420 aus diesem Material bestehen.

Eine Erregerspule 1495 ist in den Rahmen 1400 eingebettet und insbesondere in einer nicht näher bezeichneten Vertiefung des Rahmens 1400 angeordnet. Der Rahmen 1400 ist mit einem Stützelement 1490 versehen, welches insbesondere ringförmig ausgebildet ist und die Teilblöcke 1445 an einem radial äusseren Rand umschliesst. Das Stützelement 1490 stützt die Teilblöcke 1445 gegen radial nach aussen wirkende Kräfte ab, welche insbesondere während eines Betriebes beispielsweise aufgrund von Magnetfeldern auftreten. Das Stützelement 1490 besteht vorzugsweise aus einem elektrisch nichtleitenden Material, beispielsweise faserverstärktem Kunststoff, so dass unerwünschte Wirbelströme innerhalb des Stützelements 1490 vermieden werden. Beispielsweise besteht das Stützelement 1490 aus einem Spritzgussteil, in welches die Teilblöcke 1445 und insbesondere auch die Erregerspule 1495 eingespritzt sind. Ein zweites Stützelement 1496 stützt den Rahmen 1400 in axialer Richtung ab und besteht vorzugsweise aus einem elektrisch nichtleitenden Material und/oder ist vorzugsweise ebenfalls mit Unterbrechungen versehen.

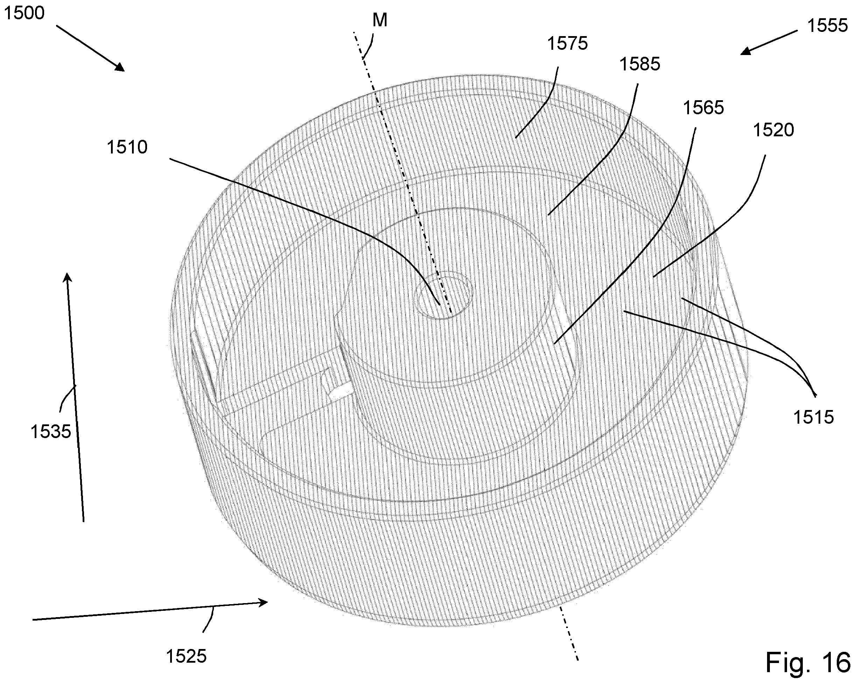

In Fig. 16 ist ein Rahmen 1500 in einer perspektivischen Ansicht dargestellt, welcher in ein Arbeitsgerät gemäss den Ansprüchen, beispielsweise in das in Fig. 1 gezeigte Setzgerät 10 oder das in Fig. 2 gezeigte Setzgerät 410, einsetzbar ist. Der Rahmen 1500 hat eine im Wesentlichen zylindrische, insbesondere kreiszylindrische Aussenkontur und erstreckt sich bezüglich einer Arbeitsachse M des Arbeitsgeräts in einer umlaufenden Richtung. Insbesondere fällt eine Zylinderachse der Aussenkontur mit der Arbeitsachse M zusammen. Der Rahmen 1500 weist einen bezüglich der Arbeitsachse M zentralen Durchbruch 1510 auf, welcher den Rahmen 1500 in einer bezüglich der Arbeitsachse M axialen Richtung vollständig durchsetzt. Weiterhin weist der Rahmen 1500 eine ringförmige Vertiefung 1555 auf, in welche ein Arbeitskolben und/oder ein Kurzschlussläufer eintaucht. Die Vertiefung 1555 weist eine Innenwand 1565, eine Aussenwand 1575 sowie einen Boden 1585 auf, wobei eine nicht gezeigte Erregerspule an dem Boden 1585 angeordnet ist, so dass gegebenenfalls der Kurzschlussläufer in geringem Abstand gegenüber der Erregerspule angeordnet ist.

Der Rahmen 1500 ist aus mehreren ebenen Lagen 1515 aus einem weichmagnetischen und elektrisch leitenden Material gebildet, welche durch mehrere Zwischenlagen voneinander getrennt sind. Die Lagen 1515 werden beispielsweise von Blechen gebildet. Die Lagen 1515 sind in einer Stapelrichtung 1525 aufeinandergestapelt, welche zu der Arbeitsachse M insbesondere rechtwinklig geneigt und in dem gesamten Rahmen 1500 gleich ist. Die Zwischenlagen bilden Unterbrechungen 1520, welche den Rahmen 1500 vollständig durchsetzen, das heisst in einer zu der Arbeitsachse M senkrechten Richtung 1535 und in der axialen Richtung vollständig durchsetzen. Die Unterbrechungen 1520 erstrecken sich in der zu der Arbeitsachse M senkrechten Richtung 1535 und in der axialen Richtung und sind nicht zu der axialen Richtung geneigt. Dadurch, dass die Lagen 1515 eben ausgebildet und zumeist gegenüber der Zylinderachse parallelversetzt sind, sind die Unterbrechungen 1520 bereichsweise zu der radialen Richtung geneigt. Die Lagen 1515 sind vorzugsweise mit einem elektrisch nichtleitenden Material beschichtet, so dass die Unterbrechungen 1520 aus diesem Material bestehen.

Bei nicht gezeigten Ausführungsbeispielen stehen zur Bildung von Kühlelementen einige der Lagen gegenüber anderen Lagen axial und/oder radial vor. Eine Kühlung des Rahmens verbessert unter Umständen eine Konstanz der auf den Kurzschlussläufer übertragenen Energie.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Setzgerät auch für andere Anwendungen einsetzbar ist.

## Patentansprüche

1. Arbeitsgerät, insbesondere handgeführtes Arbeitsgerät, aufweisend einen Arbeitskolben (60), welcher dafür vorgesehen ist, sich entlang einer Arbeitsachse zu bewegen, einen Antrieb (65), welcher dafür vorgesehen ist, den Arbeitskolben (60) entlang der Arbeitsachse anzutreiben, wobei der Antrieb (65) einen elektrischen Kondensator (300), einen an dem Arbeitskolben (60) angeordneten Kurzschlussläufer (90) und eine Erregerspule (100) aufweist, welche bei einer Schnellentladung des Kondensators (300) mit Strom durchflossen wird und ein Magnetfeld erzeugt, welches den Arbeitskolben (60) beschleunigt, wobei das Arbeitsgerät einen Rahmen (105) aus einem weichmagnetischen und elektrisch leitenden Material aufweist, welcher die Erregerspule (100) umgibt und sich bezüglich der Arbeitsachse in einer umlaufenden Richtung erstreckt, wobei der Rahmen (105) eine oder mehrere zumindest teilweise Unterbrechungen (620) aufweist, welche sich über einen wesentlichen Teil einer bezüglich der Arbeitsachse radialen Ausdehnung des Rahmens (105) erstrecken, wobei der Rahmen (105) aus mehreren Lagen (1315) des weichmagnetischen und elektrisch leitenden Materials gebildet ist, welche durch die eine oder mehreren Unterbrechungen (620) voneinander getrennt sind, **dadurch gekennzeichnet, dass** die Lagen (1315) des weichmagnetischen und elektrisch leitenden Materials in einer Stapelrichtung (1525) aufeinandergestapelt sind, welche zu der Arbeitsachse geneigt ist.

2. Arbeitsgerät nach Anspruch 1, ausgebildet als Setzgerät zum Eintreiben von Befestigungselementen in einen Untergrund, aufweisend eine Aufnahme (20), welche dafür vorgesehen ist, ein Befestigungselement aufzunehmen, wobei der Arbeitskolben (60) dafür vorgesehen ist, ein in der Aufnahme (20) aufgenommenes Befestigungselement entlang der Arbeitsachse in den Untergrund zu befördern, und wobei der Antrieb (65) dafür vorgesehen ist, den Arbeitskolben (60) entlang der Arbeitsachse auf das Befestigungselement zu anzutreiben.

3. Arbeitsgerät nach einem der vorhergehenden Ansprüche, wobei sich die eine oder mehreren Unterbrechungen (620) bis zu einem inneren Rand (1350) der radialen Ausdehnung des Rahmens (105) erstrecken.

4. Arbeitsgerät nach einem der vorhergehenden Ansprüche, wobei sich die eine oder mehreren Unterbrechungen (620) bis zu einem äusseren Rand (1330) der radialen Ausdehnung des Rahmens (105) erstrecken.

5. Arbeitsgerät nach einem der vorhergehenden Ansprüche, wobei sich die eine oder mehreren Unterbrechungen (620) bis zu einem stirnseitigen Rand (1360) einer bezüglich der Arbeitsachse axialen Ausdehnung des Rahmens (105) erstrecken.

6. Arbeitsgerät nach einem der vorhergehenden Ansprüche, wobei die eine oder mehreren Unterbrechungen (620) den Rahmen (105) vollständig durchsetzen.

7. Arbeitsgerät nach einem der vorhergehenden Ansprüche, wobei sich die eine oder mehreren Unterbrechungen (620) in der radialen Richtung erstrecken.

8. Arbeitsgerät nach einem der vorhergehenden Ansprüche, wobei sich die eine oder mehreren Unterbrechungen (620) zu der radialen Richtung geneigt erstrecken.

9. Arbeitsgerät nach einem der vorhergehenden Ansprüche, wobei sich die eine oder mehreren Unterbrechungen (620) in einer bezüglich der Arbeitsachse axialen Richtung erstrecken.

10. Arbeitsgerät nach einem der vorhergehenden Ansprüche, wobei sich die eine oder mehreren Unterbrechungen (620) zu einer bezüglich der Arbeitsachse axialen Richtung geneigt erstrecken.

11. Arbeitsgerät nach einem der vorhergehenden Ansprüche, wobei die Stapelrichtung (1525) zu der Arbeitsachse rechtwinklig geneigt ist.

12. Arbeitsgerät nach einem der vorhergehenden Ansprüche, wobei die Lagen (1315) des weichmagnetischen und elektrisch leitenden Materials im Wesentlichen eben sind.

## Claims

1. Tool, in particular hand-held tool, having a working piston (60), which is intended to move along a working axis, a drive (65), which is intended to drive the working piston (60) along the working axis, wherein the drive (65) has an electrical capacitor (300), a squirrel-cage rotor (90), which is arranged on the working piston (60), and an excitation coil (100), which during rapid discharge of the capacitor (300) is flowed through by current and generates a magnetic field that accelerates the working piston (60), wherein the tool has a frame (105), which is made of a soft-magnetic and electrically conducting material, surrounds the excitation coil (100) and extends in a circumferential direction with respect to the working axis, wherein the frame (105) has one or more at least partial interruptions (620), which extend over a significant part of a radial extent of the frame (105) with respect to the working axis, wherein the frame (105) is formed of multiple layers (1315) of the soft-magnetic and electrically conducting material, which are separated from one another by the one or more interruptions (620), **characterized in that** the layers (1315) of the soft-magnetic and electrically conducting material are stacked one on top of the other in a stacking direction (1525), which is inclined in relation to the working axis.

2. Tool according to Claim 1, designed as a setting tool for driving fastening elements into a substrate, having a holder (20), which is intended to hold a fastening element, wherein the working piston (60) is intended to transfer a fastening element held in the holder (20) into the substrate along the working axis, and wherein the drive (65) is intended to drive the working piston (60) onto the fastening element along the working axis.

3. Tool according to either of the preceding claims, wherein the one or more interruptions (620) extend up to an inner edge (1350) of the radial extent of the frame (105).

4. Tool according to one of the preceding claims, wherein the one or more interruptions (620) extend up to an outer edge (1330) of the radial extent of the frame (105).

5. Tool according to one of the preceding claims, wherein the one or more interruptions (620) extend up to an end edge (1360) of an axial extent of the frame (105) with respect to the working axis.

6. Tool according to one of the preceding claims, wherein the one or more interruptions (620) pass completely through the frame (105).

7. Tool according to one of the preceding claims, wherein the one or more interruptions (620) extend in the radial direction.

8. Tool according to one of the preceding claims, wherein the one or more interruptions (620) extend in an inclined manner in relation to the radial direction.

9. Tool according to one of the preceding claims, wherein the one or more interruptions (620) extend in an axial direction with respect to the working axis.

10. Tool according to one of the preceding claims, wherein the one or more interruptions (620) extend in an inclined manner in relation to an axial direction with respect to the working axis.

11. Tool according to one of the preceding claims, wherein the stacking direction (1525) is inclined at right angles in relation to the working axis.

12. Tool according to one of the preceding claims, wherein the layers (1315) of the soft-magnetic and electrically conducting material are substantially planar.

## Revendications

1. Appareil de travail, en particulier appareil de travail à main, comportant un piston de travail (60) destiné à se déplacer le long d'un axe de travail, un entraînement (65) destiné à entraîner le piston de travail (60) le long d'un axe de travail, l'entraînement (65) comportant un condensateur électrique (300), un rotor à cage d'écureuil (90) disposé sur le piston de travail (60) et une bobine d'excitation (100) qui est traversée par un courant lorsque le condensateur (300) est déchargé rapidement et génère un champ magnétique qui accélère le piston de travail (60), l'appareil de travail comportant un cadre (105) en matériau magnétique doux et électriquement conducteur qui entoure la bobine d'excitation (100) et s'étend dans une direction circonférentielle par rapport à l'axe de travail, le cadre (105) comportant une ou plusieurs interruptions au moins partielles (620) qui s'étendent sur une partie importante d'une extension radiale du cadre (105) par rapport à l'axe de travail, le cadre (105) étant formé de plusieurs couches (1315) du matériau magnétique doux et électriquement conducteur qui sont séparées les unes des autres par les une ou plusieurs interruptions (620), **caractérisé en ce que** les couches (1315) du matériau magnétique doux et électriquement conducteur sont empilées les unes sur les autres dans une direction d'empilement (1525) qui est inclinée par rapport à l'axe de travail.

2. Appareil de travail selon la revendication 1, conçu comme appareil de pose destiné à enfoncer des éléments de fixation dans un substrat, comportant un logement (20) destiné à recevoir un élément de fixation, le piston de travail (60) étant destiné à transporter un élément de fixation, reçu dans le logement (20), dans le substrat le long de l'axe de travail, et l'entraînement (65) étant destiné à entraîner le piston de travail (60) le long de l'axe de travail sur l'élément de fixation.

3. Appareil de travail selon l'une des revendications précédentes, les une ou plusieurs interruptions (620) s'étendant jusqu'à un bord intérieur (1350) de l'extension radiale du cadre (105).

4. Appareil de travail selon l'une des revendications précédentes, les une ou plusieurs interruptions (620) s'étendant jusqu'à un bord extérieur (1330) de l'extension radiale du cadre (105).

5. Appareil de travail selon l'une des revendications précédentes, les une ou plusieurs interruptions (620) s'étendant jusqu'à un bord avant (1360) d'une extension axiale du cadre (105) par rapport à l'axe de travail.

6. Appareil de travail selon l'une des revendications précédentes, les une ou plusieurs interruptions (620) pénétrant complètement dans le cadre (105).

7. Appareil de travail selon l'une des revendications précédentes, les une ou plusieurs interruptions (620) s'étendant dans la direction radiale.

8. Appareil de travail selon l'une des revendications précédentes, les une ou plusieurs interruptions (620) s'étendant de manière inclinée dans la direction radiale.

9. Appareil de travail selon l'une des revendications précédentes, les une ou plusieurs interruptions (620) s'étendant dans une direction axiale par rapport à l'axe de travail.

10. Appareil de travail selon l'une des revendications précédentes, les une ou plusieurs interruptions (620) s'étendant de manière inclinée dans une direction axiale par rapport à l'axe de travail.

11. Appareil de travail selon l'une des revendications précédentes, la direction d'empilement (1525) étant inclinée perpendiculairement à l'axe de travail.

12. Appareil de travail selon l'une des revendications précédentes, les couches (1315) du matériau magnétique doux et électriquement conducteur étant sensiblement plates.
